# EUROPEAN PATENT SPECIFICATION

(11) **EP 4 514 890 B1**
(45) Date of publication and mention of the grant of the patent: **28.01.2026**
(21) Application number: 23720807.9
(22) Date of filing: 18.04.2023
(51) Int. Cl.: C08L 23/12

(54) **POLYMER COMPOSITION WITH IMPROVED FLAME RETARDANT PERFORMANCE AND FLEXIBILITY**
POLYMERZUSAMMENSETZUNG MIT VERBESSERTER FLAMMHEMMENDER LEISTUNG UND FLEXIBILITÄT
COMPOSITION POLYMÈRE PRÉSENTANT UNE PERFORMANCE ET UNE FLEXIBILITÉ IGNIFUGES AMÉLIORÉES

(30) Priority: 29.04.2022 WO PCT/CN2022/090431; 21.06.2022 EP 22180052
(43) Date of publication of application: 05.03.2025
(73) Proprietor: SABIC Global Technologies B.V., 4612 PX Bergen op Zoom (NL)
(72) Inventor: WEN, Liang, 6160 GA Geleen (NL); SALES FERNANDEZ, Jose, 6160 GA Geleen (NL); JIANG, Chaodong, 6160 GA Geleen (NL); ZHOU, Jiaoyan, 6160 GA Geleen (NL)
(74) Representative: Sabic Intellectual Property Group
(86) International application number: PCT/EP2023/059953
(87) International publication number: WO 2023/208639

(56) References cited:
- EP-A1- 3 255 095
- WO-A1-2005/097900
- WO-A1-2018/019762
- US-A1- 2018 016 418

## Description

The present invention relates to a polymer composition comprising (A) a first heterophasic propylene copolymer, (B) a second heterophasic propylene copolymer, (C) a flame retardant composition and (D) an aromatic phosphate ester. The present invention also relates to a process for the preparation of the said polymer composition and use of the said polymer composition.

Polymer compositions with flame retardant properties is well known in the art, e.g. EP3255095 discloses a flame-retardant polyolefin resin composition comprising polypropylene, melamine pyrophosphate, piperazine pyrophosphate, glass fiber and zinc oxide.

EP3202841 discloses a flame-retardant polypropylene resin composition comprising a polypropylene resin, glass fiber, phosphorous-containing flame retardant (FP2200 from Adeka), antioxidant, neutralizing agent and a surfactant.

WO2018/019762A1 discloses a flame retardant polypropylene composition comprising
(A) a polypropylene-based polymer,
(B) a first flame retardant in an amount of 15 to 40 wt% of the total composition, wherein the first flame retardant is in the form of particles comprising ammonium polyphosphate and at least one phosphate selected from the group consisting of
   melamine phosphate,
   melamine polyphosphate,
   melamine pyrophosphate,
   piperazine phosphate,
   piperazine polyphosphate,
   piperazine pyrophosphate,
   2-methylpiperazine monophosphate,
   tricresyl phosphate,
   alkyl phosphates,
   haloalkyl phosphates,
   tetraphenyl pyrophosphate,
   poly(2-hydroxy propylene spirocyclic pentaerythritol bisphosphate) and
   poly(2,2-dimethylpropylene spirocyclic pentaerythritol bisphosphonate) and
(C) a second flame retardant in an amount of 0.1 to 15 wt% of the total composition, wherein the second flame retardant comprises an aromatic phosphate ester.

The combination of stiffness and flame retardant property of such polymer composition makes it a promising candidate as material for enclosure of batteries in electrical vehicle (EV). To improve the production efficiency of an EV battery, there is a desire to perform the assembly the enclosure of an EV battery by a snap-fit mechanism. A snap-fit mechanism typically comprises at least one snap-fit joint, wherein the snap-fit joint consists of a protruding edge on one part to be assembled and a snap-in area on another part to be assembled. During the assembly of two parts with a snap-fit mechanism and upon closing the distance between the two parts, the protruding edge is first deformed, e.g. bended, then the protruding edge fits in the snap-in area and recovers to its initial shape where the protruding edge and the snap-in area form a snap-fit joint. The material used in the snap-fit mechanism should have sufficient flexibility so that the protruding edge does not break during the deformation.

The presence of the flame retardant agent in the polymer composition often leads to brittleness and makes the polymer composition unsuitable to be used in a battery enclosure assembled by a snap-fit mechanism. Therefore there is a need of a polymer composition having excellent flame retardant performance and sufficient flexibility. Preferably the polymer composition has a density of lower than 0.93 g/cm3 for the purpose of weight reduction of an electrical vehicle.

The object of the present invention is achieved by a polymer composition comprising
(A) a first heterophasic propylene copolymer, wherein the MFI of the first heterophasic propylene copolymer is in the range from 3.6 to 14 g/10min as measured according to ISO1133:1-2011 at 230°C, 2.16kg, wherein the first heterophasic propylene copolymer comprises a first propylene-based matrix and a first ethylene-propylene copolymer, wherein the amount of the first ethylene-propylene copolymer is in the range from 18 to 26 wt% based on the total amount of the first heterophasic propylene copolymer;
(B) a second heterophasic propylene copolymer, wherein the MFI of the second heterophasic propylene copolymer is in the range from 18 to 51 g/10min as measured according to ISO1133:1-2011 at 230°C, 2.16kg, wherein the second heterophasic propylene copolymer comprises a second propylene-based matrix and a second ethylene-propylene copolymer, wherein the amount of the second ethylene-propylene copolymer is in the range from 15 to 23 wt% based on the total amount of the second heterophasic propylene copolymer;
(C) a flame retardant composition comprising at least one phosphate;
(D) an aromatic phosphate ester,
wherein the amount of the first heterophasic propylene copolymer is in the range from 10 to 38 wt%, the amount of the second heterophasic propylene copolymer is in the range from 35 to 60 wt%, the amount of the flame retardant composition is in the range from 13 to 33 wt%, the amount of the aromatic phosphate ester is in the range from 0.3 to 13 wt% based on the total amount of the polymer composition.

The inventor of the present invention found the polymer composition according to the invention has superior flame retardant properties and sufficient flexibility to be used in the material of an EV battery enclosure suitable for snap-fit assembly. In the context of the present invention "flexibility" is quantified as elongation at break in a tensile measurement according to ISO527-1:2019 with 1A specimen.

### (A) First heterophasic propylene copolymer and (B) Second heterophasic propylene copolymer

Heterophasic propylene copolymers, also known as impact propylene copolymers or propylene block copolymers, are an important class of polymers due to their attractive combination of mechanical properties, such as impact strength over a wide temperature range and their low cost. These copolymers find a wide range of applications ranging from the consumer industry (for example packaging and housewares), the automotive industry to electrical applications.

Heterophasic propylene copolymers are generally prepared in one or more reactors, by polymerization of propylene in the presence of a catalyst and subsequent polymerization of an ethylene-α-olefin mixture. The resulting polymeric materials are heterophasic, but the specific morphology usually depends on the preparation method and monomer ratios used.

The first heterophasic propylene copolymer and the second heterophasic propylene copolymer can be produced using any conventional technique known to the skilled person, for example multistage process polymerization, such as bulk polymerization, gas phase polymerization, slurry polymerization, solution polymerization or any combinations thereof. Any conventional catalyst systems, for example, Ziegler-Natta or metallocene may be used. Such techniques and catalysts are described, for example, in WO06/010414; Polypropylene and other Polyolefins, by Ser van der Ven, Studies in Polymer Science 7, Elsevier 1990; WO06/010414, US4399054 and US4472524. Preferably, the first heterophasic propylene copolymer and second heterophasic propylene copolymer are produced in the presence of Ziegler-Natta catalyst.

The first heterophasic propylene copolymer and second heterophasic propylene copolymer may be prepared by a process comprising the steps of
- polymerizing propylene and optionally ethylene and/or α-olefin in the presence of a catalyst system to obtain the propylene-based matrix and
- subsequently polymerizing ethylene and α-olefin in the propylene-based matrix in the presence of a catalyst system to obtain the dispersed ethylene-a olefin copolymer. These steps are preferably performed in different reactors. The catalyst systems for the first step and for the second step may be different or same.

The first heterophasic propylene copolymer comprises a first propylene-based matrix and a first ethylene-propylene copolymer, wherein the amount of the first ethylene-propylene copolymer is in the range from 18 to 26 wt%, preferably in the range from 20 to 24 wt% based on the total amount of the first heterophasic propylene copolymer. The first propylene-based matrix typically forms the continuous phase in the first heterophasic propylene copolymer. The amounts of the first propylene-based matrix and the first ethylene-propylene copolymer may be determined by 13C-NMR, as well known in the art. Preferably the amount of moieties derived from ethylene in the first ethylene-propylene copolymer is in the range from 15 to 65 wt%, preferably from 30 to 57 wt%, more preferably in the range from 45 to 52 wt% based on the total amount of the first ethylene-propylene copolymer.

The first propylene-based matrix preferably consists of a first propylene homopolymer and/or a first propylene copolymer consisting of at least 96 wt% of propylene monomer units and at most 4 wt% of comonomer units selected from ethylene monomer units and α-olefin monomer units having 4 to 10 carbon atoms.

Preferably, the comonomer in the first propylene- α-olefin copolymer is selected from the group of ethylene, 1-butene, 1-pentene, 4-methyl-1-pentene, 1-hexen, 1-heptene and 1-octene, and is preferably ethylene.

It is common general knowledge that the first propylene-based matrix and the first ethylene-propylene copolymer are not the same.

Preferably, the first propylene-based matrix consists of a first propylene homopolymer. The fact that the first propylene-based matrix consists of a first propylene homopolymer is advantageous in that a higher stiffness is obtained compared to the case where the first propylene-based matrix is a first propylene copolymer.

The melt flow index (MFI) of the first heterophasic propylene copolymer is in the range from 3.6 to 14 g/10min, preferably in the range from 5.1 to 12 g/10min, preferably from 6.7 to 9.8 g/10min g/10min as measured according to ISO1133:1-2011 at 230°C, 2.16kg.

The second heterophasic propylene copolymer comprises a second propylene-based matrix and a second ethylene-propylene copolymer, wherein the amount of the second ethylene-propylene copolymer is in the range from 15 to 23 wt%, preferably in the range from 19 to 22 wt% based on the total amount of the second heterophasic propylene copolymer. The second propylene-based matrix typically forms the continuous phase in the second heterophasic propylene copolymer. The amounts of the second propylene-based matrix and the second ethylene-propylene copolymer may be determined by 13C-NMR, as well known in the art. Preferably the amount of moieties derived from ethylene in the second ethylene-propylene copolymer is in the range from 16 to 63 wt%, preferably from 31 to 51 wt%, more preferably in the range from 40 to 45 wt% based on the total amount of the second ethylene-propylene copolymer.

The second propylene-based matrix preferably consists of a second propylene homopolymer and/or a second propylene copolymer consisting of at least 96 wt% of propylene monomer units and at most 4 wt% of comonomer units selected from ethylene monomer units and α-olefin monomer units having 4 to 10 carbon atoms.

Preferably, the comonomer in the second propylene- α-olefin copolymer is selected from the group of ethylene, 1-butene, 1-pentene, 4-methyl-1-pentene, 1-hexen, 1-heptene and 1-octene, and is preferably ethylene.

It is common general knowledge that the second propylene-based matrix and the second ethylene-propylene copolymer are not the same.

Preferably, the second propylene-based matrix consists of a second propylene homopolymer. The fact that the second propylene-based matrix consists of a second propylene homopolymer is advantageous in that a higher stiffness is obtained compared to the case where the second propylene-based matrix is a second propylene copolymer.

The melt flow index (MFI) of the second heterophasic propylene copolymer is in the range from 18 to 51 g/10min, preferably in the range from 22 to 42 g/10min, more preferably from 26 to 36 g/10min as measured according to ISO1133:1-2011 at 230°C, 2.16kg.

In a preferred embodiment that the MFI of the first heterophasic propylene copolymer and the MFI of the second heterophasic propylene copolymer are in the preferred range, the polymer composition shows even better balance between flame retardant performance and flexibility.

In a preferred embodiment, the first heterophasic propylene copolymer consists of the first propylene-based matrix, the first ethylene-propylene copolymer and optional additives, wherein the first propylene-based matrix consists of a first propylene homopolymer, wherein the total amount of the moieties derived from ethylene is in the range from 7.0 to 14 wt%, preferably in the range from 8.8 to 12 wt%, even more preferably from 9.5 to 11 wt% based on the total mount of the first heterophasic propylene copolymer.

In a preferred embodiment, the second heterophasic propylene copolymer consists of the second propylene-based matrix, the second ethylene-propylene copolymer and optional additives, wherein the second propylene-based matrix consists of a second propylene homopolymer, wherein the total amount of the moieties derived from ethylene is in the range from 5.0 to 12 wt%, preferably in the range from 6.7 to 11 wt%, even more preferably from 8.2 to 10 wt% based on the total mount of the second heterophasic propylene copolymer.

### (C) Flame retardant composition

The flame retardant composition comprises at least one phosphate, wherein the phosphate is preferably selected from the group consisting of
melamine phosphate,
melamine polyphosphate,
melamine pyrophosphate,
piperazine phosphate,
piperazine polyphosphate,
piperazine pyrophosphate,
2-methylpiperazine monophosphate,
tricresyl phosphate,
alkyl phosphates,
haloalkyl phosphates,
tetraphenyl pyrophosphate,
poly(2-hydroxy propylene spirocyclic pentaerythritol bisphosphate),
poly(2,2-dimethylpropylene spirocyclic pentaerythritol bisphosphonate).

The flame retardant composition is preferably in the form of particles. Preferably the flame retardant composition has a normal particle size distribution (D50) of at least 8 microns as determined by Mastersizer 2000 available from Malvern.

Preferably, the amount of phosphate in the flame retardant composition is in the range from 40 to 75 wt% as measured after treating with nitric acid using ICP-OES spectrometer (iCAP 6300 Duo available from Thermo Fisher)

Preferably, the flame retardant composition comprises piperazine pyrophosphate, melamine phosphate and zinc oxide.

Preferably, the amount of piperazine pyrophosphate is in the range from 40 to 69 wt%, more preferably from 50 to 67 wt%; the amount of melamine phosphate is in the range from 29 to 49 wt% and the amount of zinc oxide is in the range from 1 to 10 wt% based on the total amount of the flame retardant composition.

### (D) Aromatic phosphate ester

Preferably, the aromatic phosphate ester is selected from the group consisting of resorcinol bis(diphenyl phosphate);
tetraphenyl resorcinol bis(diphenylphosphate);
bisphenol A bis(diphenyl phosphate);
bisphenol A diphosphate;
resorcinol bis(di-2,6-xylyl phosphate),
phosphoric acid, mixed esters with [1,1'-biphenyl]-4-4'-diol and phenol; phosphorictrichloride, polymer with1,3-benzenediol,phenylester;
1,3-phenylene-tetrakis(2,6-dimethylphenyl)diphosphate;
isopropenylphenyl diphenyl phosphate;
4-phenylphenolformaldehyde phenylphosphonate;
tris(2,6-xylyl) phosphate;
resorcinol bis(di-2,6-xylyl phosphate);
bisphenol S bis(diphenyl phosphate);
resorcinol-bisphenol A phenyl phosphates.

Preferably, the aromatic phosphate ester is added as a liquid.

Preferably, the aromatic phosphate ester is bisphenol A bis(diphenyl phosphate).

### Polymer composition

The amount of the first heterophasic propylene copolymer is in the range from 10 to 38 wt%, preferably from 15 to 30 wt%, more preferably from 20 to 28 wt%, even more preferably from 22 to 26 wt%, the amount of the second heterophasic propylene copolymer is in the range from 35 to 60 wt%, preferably from 40 to 55 wt%, more preferably from 42 to 50 wt%, the amount of the flame retardant composition is in the range from 13 to 33 wt%, preferably from 18 to 27 wt%, more preferably from 19 to 24 wt%, the amount of the aromatic phosphate ester is in the range from 0.3 to 13 wt%, preferably from 1.8 to 8.0 wt%, more preferably from 2.5 to 4.5 wt% based on the total amount of the polymer composition.

Preferably the polymer composition according to any one of the preceding claims, wherein the polymer composition has a UL94 rating of V0 at 0.8mm, wherein the specimens are conditioned in an environment of 23°C, 50% RH for 48 hours after forming and prior to UL94 measurement.

Preferably the polymer composition has a tensile elongation at break of at least 42 % as measured according to ISO527-1:2019 using 1A specimen.

Preferably the density of the polymer composition is in the range from 0.956 to 1.200 g/cm3, preferably from 0.989 to 1.158 g/cm3, more preferably from 1.002 to 1.098 g/cm3 as measured according to ISO 1183-1:2004.

The present invention further relates to a process for the preparation of the polymer composition according to the invention comprising the sequential steps:
- Providing the first heterophasic propylene copolymer, the second heterophasic propylene copolymer, the flame retardant composition and the aromatic phosphate ester;
- Mixing the first heterophasic propylene copolymer, the second heterophasic propylene copolymer, the flame retardant composition and the aromatic phosphate ester in an extruder.

The present invention further relates to the use of the polymer composition according to the invention for improving flame retardant performance and flexibility of an article, wherein the article is preferably a battery enclosure.

The present invention further relates to an article comprising the polymer composition according to the invention, wherein the amount of the polymer composition is at least 95 wt%, preferably at least 98 wt% based on the total amount of the article, wherein the article is preferably a battery enclosure.

### Experiment

### Material

595A is a propylene homopolymer commercially available from SABIC, having an MFI of 47 g/10min as measured according to ISO1133:1-2011 at 230°C, 2.16kg.

591A is a propylene homopolymer commercially available from SABIC, having an MFI of 6 g/10min as measured according to ISO1133:1-2011 at 230°C, 2.16kg.

87MK40T is a heterophasic propylene copolymer commercially available from SABIC, having an MFI of 8 g/10min as measured according to ISO1133:1-2011 at 230°C, 2.16kg. 87MK40T comprises 22 wt% ethylene-propylene copolymer and the total amount of moieties derived from ethylene in 87MK40T is 10.5 wt% as determined by NMR.

511MK40T is a heterophasic propylene copolymer commercially available from SABIC, having an MFI of 30 g/10min as measured according to ISO1133:1-2011 at 230°C, 2.16kg.511MK40T comprises 21 wt% ethylene-propylene copolymer and the total amount of moieties derived from ethylene in 511MK40T is 9 wt% as determined by NMR.

FP2500S is a flame retardant composition commercially available from Adeka ADK STAB FP-2500S. FP-2500S is a flame retardant composition according to the most preferred embodiment of the invention.

CR741 is Bisphenol-A Bis(Diphenyl Phosphate) commercially available from Daihachi.

Additive package: The additive package comprises 30 wt% stabilizer, 15 wt% anti-dipping agent (TSAN F449 from SABIC), 8 wt% nucleating agent, 7 wt% slipping agent, 40 wt% color masterbatch. The weight percentage is based on the total amount of the additive package.

### Sample preparation

All IEs and CEs were prepared in a twin screw extruder. The formulations of IEs and CEs are in Table 1

**Table 1 Formulations of IEs and CEs**

| | CE1 | CE2 | CE3 | IE1 | IE2 | IE3 | CE4 | CE5 |
|---|---|---|---|---|---|---|---|---|
| 595A (wt%) | 45.8 | | | | | | | |
| 591A (wt%) | 33 | | | | | | | |
| 87MK40T (wt%) | | 76.7 | 26 | 24 | 26 | 25 | 73.2 | 6 |
| 511MK40T (wt%) | | | 48.7 | 47.2 | 49.2 | 48.2 | | 67.2 |
| FP2500S (wt%) | 20 | 22 | 24 | 24 | 20 | 22 | 22 | 22 |
| CR741 (wt%) | | | | 3.5 | 3.5 | 3.5 | 3.5 | 3.5 |
| Additive package (wt%) | 1.2 | 1.3 | 1.3 | 1.3 | 1.3 | 1.3 | 1.3 | 1.3 |

IEs and CEs obtained from the extruder were in pellet form. The pellets were further injection molded into specimens for measurements.

### Measurement

Melt flow index (MFI) was measured according to ISO1133:1-2011 at 230°C, 2.16kg.

Tensile properties were measured according to ISO527-1:2019 using 1A specimen.

Density was measured according to ISO 1183-1:2004.

Flame retardant measurement was taken according to UL94. Specimens with different thicknesses were used, the specimens were conditioned prior to the measurement under the following two conditions:
Condition 1: After injection molding and prior to flame retardant measurement, the specimens were conditioned in an environment of 23°C, 50% RH for 48 hours.
Condition 2: After injection molding and prior to flame retardant measurement, the specimens were conditioned in a first environment of 70°C, 50% RH for 168 hours, then conditioned in a second environment of 23°C, 20% RH for 4 hours.

### Result

The properties of IEs and CEs are shown in Table 2

**Table 2 Properties of IEs and CEs**

| | CE1 | CE2 | CE3 | IE1 | IE2 | IE3 | CE4 | CE5 |
|---|---|---|---|---|---|---|---|---|
| MFI (g/10min) | 11 | 5.29 | 9.92 | 12.01 | 12.31 | 12.43 | 6.62 | 17.3 |
| Density (g/cm3) | 1.009 | 1.020 | 1.028 | 1.038 | 1.015 | 1.022 | 1.024 | 1.023 |
| Tensile modulus (MPa) | 2104 | 1937 | 1985 | 1688 | 1600 | 1684 | 1676 | 1652 |
| Tensile Elongation at break (%) | 23 | 52.4 | 26.8 | 47.4 | 61.1 | 61.6 | 72.4 | 40.6 |
| UL94 (0.8 mm, Condition 1) | V1 | V2 | V1 | V0 | V0 | V0 | HB | V0 |
| UL94 (0.8 mm, Condition 2) | V0 | HB | V0 | V0 | V0 | V0 | V0 | V0 |
| UL94 (1.0 mm, Condition 1) | V1 | V1 | V0 | V0 | V0 | V0 | V0 | V0 |
| UL94 (1.0 mm, Condition 2) | V1 | V1 | V1 | V0 | V0 | V0 | V0 | V0 |
| UL94 (1.2 mm, Condition 1) | V0 | V1 | V0 | V0 | V0 | V0 | V0 | V0 |
| UL94 (1.2 mm, Condition 2) | V0 | V0 | V0 | V0 | V0 | V0 | V0 | V0 |
| UL94 (1.5 mm, Condition 1) | V0 | V0 | V0 | V0 | V0 | V0 | V0 | V0 |
| UL94 (1.5 mm, Condition 2) | V0 | V0 | V0 | V0 | V0 | V0 | V0 | V0 |

According to Table 2, only IEs demonstrate superior FR performance, MFI and tensile elongation at break.

## Claims

1. A polymer composition comprising
(A) a first heterophasic propylene copolymer, wherein the MFI of the first heterophasic propylene copolymer is in the range from 3.6 to 14 g/10min as measured according to ISO1133:1-2011 at 230°C, 2.16kg, wherein the first heterophasic propylene copolymer comprises a first propylene-based matrix and a first ethylene-propylene copolymer, wherein the amount of the first ethylene-propylene copolymer is in the range from 18 to 26 wt% based on the total amount of the first heterophasic propylene copolymer;
(B) a second heterophasic propylene copolymer, wherein the MFI of the second heterophasic propylene copolymer is in the range from 18 to 51 g/10min as measured according to ISO1133:1-2011 at 230°C, 2.16kg, wherein the second heterophasic propylene copolymer comprises a second propylene-based matrix and a second ethylene-propylene copolymer, wherein the amount of the second ethylene-propylene copolymer is in the range from 15 to 23 wt% based on the total amount of the second heterophasic propylene copolymer;
(C) a flame retardant composition comprising at least one phosphate;
(D) an aromatic phosphate ester,
wherein the amount of the first heterophasic propylene copolymer is in the range from 10 to 38 wt%, the amount of the second heterophasic propylene copolymer is in the range from 35 to 60 wt%, the amount of the flame retardant composition is in the range from 13 to 33 wt%, the amount of the aromatic phosphate ester is in the range from 0.3 to 13 wt% based on the total amount of the polymer composition.

2. The polymer composition according to claim 1, wherein the aromatic phosphate ester is selected from the group consisting of resorcinol bis(diphenyl phosphate);
tetraphenyl resorcinol bis(diphenylphosphate);
bisphenol A bis(diphenyl phosphate);
bisphenol A diphosphate;
resorcinol bis(di-2,6-xylyl phosphate),
phosphoric acid, mixed esters with [1,1'-biphenyl]-4-4'-diol and phenol; phosphorictrichloride, polymer with1,3-benzenediol,phenylester;
1,3-phenylene-tetrakis(2,6-dimethylphenyl)diphosphate;
isopropenylphenyl diphenyl phosphate;
4-phenylphenolformaldehyde phenylphosphonate;
tris(2,6-xylyl) phosphate;
resorcinol bis(di-2,6-xylyl phosphate);
bisphenol S bis(diphenyl phosphate);
resorcinol-bisphenol A phenyl phosphates, preferably the aromatic phosphate ester is bisphenol A bis(diphenyl phosphate).

3. The polymer composition according to claim 1 or 2, wherein the MFI of the first heterophasic propylene copolymer is in the range from 5.1 to 12 g/10min, preferably from 6.7 to 9.8 g/10min as measured according to ISO1133:1-2011 at 230°C, 2.16kg.

4. The polymer composition according to any one of the preceding claims, wherein the MFI of the second heterophasic propylene copolymer is in the range from 22 to 42 g/10min, preferably from 26 to 36 g/10min as measured according to ISO1133:1-2011 at 230°C, 2.16kg.

5. The polymer composition according to any one of the preceding claims, wherein the density of the polymer composition is in the range from 0.956 to 1.200 g/cm3, preferably from 0.989 to 1.158 g/cm3, more preferably from 1.002 to 1.098 g/cm3 as measured according to ISO 1183-1:2004.

6. The polymer composition according to any one of the preceding claims, wherein the flame retardant composition comprises piperazine pyrophosphate, melamine phosphate and zinc oxide.

7. The polymer composition according claim 6, wherein the amount of piperazine pyrophosphate is in the range from 40 to 69 wt%, preferably from 50 to 67 wt%; the amount of melamine phosphate is in the range from 29 to 49 wt% and the amount of zinc oxide is in the range from 1 to 10 wt% based on the total amount of the flame retardant composition.

8. The polymer composition according to any one of the preceding claims, wherein the amount of the first heterophasic propylene copolymer is in the range from 15 to 30 wt%, more preferably from 20 to 28 wt%, even more preferably from 22 to 26 wt% based on the total amount of the polymer composition.

9. The polymer composition according to any one of the preceding claims, wherein the amount of the second heterophasic propylene copolymer is in the range from 40 to 55 wt%, more preferably from 42 to 50 wt% based on the total amount of the polymer composition.

10. The polymer composition according to any one of the preceding claims, wherein the amount of the flame retardant composition is in the range from 18 to 27 wt%, preferably from 19 to 24 wt% based on the total amount of the polymer composition.

11. The polymer composition according to any one of the preceding claims, wherein the amount of the aromatic phosphate ester is in the range from 1.8 to 8.0 wt%, more preferably from 2.5 to 4.5 wt% based on the total amount of the polymer composition.

12. The polymer composition according to any one of the preceding claims, wherein the polymer composition has a UL94 rating of V0 at 0.8mm, wherein the specimens are conditioned in an environment of 23°C, 50% RH for 48 hours after forming and prior to UL94 measurement.

13. The polymer composition according to any one of the preceding claims, wherein the polymer composition has a tensile elongation at break of at least 42 % as measured according to ISO527-1:2019 using 1A specimen.

14. Process for the preparation of the polymer composition according to any one of claims 1 to 13 comprising the sequential steps:
- Providing the first heterophasic propylene copolymer, the second heterophasic propylene copolymer, the flame retardant composition and the aromatic phosphate ester;
- Mixing the first heterophasic propylene copolymer, the second heterophasic propylene copolymer, the flame retardant composition and the aromatic phosphate ester in an extruder.

15. Use of the polymer composition according to any one of claims 1 to 13 for improving flame retardant performance and flexibility of an article.

## Patentansprüche

1. Polymerzusammensetzung, umfassend
(A) ein erstes heterophasisches Propylencopolymer, wobei der MFI des ersten heterophasischen Propylencopolymers im Bereich von 3,6 bis 14 g/10 min liegt, wie nach IS01133:1-2011 bei 230°C, 2,16 kg gemessen, wobei das erste heterophasische Propylencopolymer eine erste Matrix auf Propylenbasis und ein erstes Ethylen-Propylen-Copolymer umfasst, wobei die Menge des ersten Ethylen-Propylen-Copolymers im Bereich von 18 bis 26 Gew.-% basierend auf der Gesamtmenge des ersten heterophasischen Propylencopolymers liegt;
(B) ein zweites heterophasisches Propylencopolymer, wobei der MFI des zweiten heterophasischen Propylencopolymers im Bereich von 18 bis 51 g/10 min liegt, wie nach IS01133:1-2011 bei 230 °C, 2,16 kg gemessen, wobei das zweite heterophasische Propylencopolymer eine zweite Matrix auf Propylenbasis und ein zweites Ethylen-Propylen-Copolymer umfasst, wobei die Menge des zweiten Ethylen-Propylen-Copolymers im Bereich von 15 bis 23 Gew.-% basierend auf der Gesamtmenge des zweiten heterophasischen Propylencopolymers liegt;
(C) eine feuerfeste Zusammensetzung, umfassend mindestens ein Phosphat;
(D) einen aromatischen Phosphatester,
wobei die Menge des ersten heterophasischen Propylencopolymers im Bereich von 10 bis 38 Gew.-% liegt, die Menge des zweiten heterophasischen Propylencopolymers im Bereich von 35 bis 60 Gew.-% liegt, die Menge der feuerfesten Zusammensetzung im Bereich von 13 bis 33 Gew.-% liegt, wobei die Menge des aromatischen Phosphatesters im Bereich von 0,3 bis 13 Gew.-% liegt, bezogen auf die Gesamtmenge der Polymerzusammensetzung.

2. Polymerzusammensetzung nach Anspruch 1, wobei der aromatische Phosphatester ausgewählt ist aus der Gruppe bestehend aus Resorcinolbis(diphenylphosphat);
Tetraphenylresorcinolbis(diphenylphosphat);
Bisphenol-A-bis(diphenylphosphat);
Bisphenol-A-diphosphat;
Resorcinolbis(di-2,6-xylylphosphat),
Phosphorsäure, gemischte Ester mit [1,1'-Biphenyl]-4-4'-diol und Phenol; Phosphortrichlorid, Polymer mit 1,3-Benzoldiolphenylester;
1,3-Phenylen-tetrakis(2,6-dimethylphenyl)diphosphat;
Isopropenylphenyldiphenylphosphat;
4-Phenylphenolformaldehydphenylphosphonat;
Tris(2,6-xylyl)phosphat;
Resorcinolbis(di-2,6-xylylphosphat);
Bisphenol-S-bis(diphenylphosphat);
Resorcinol-Bisphenol-Aphenylphosphate, wobei der aromatische Phosphatester bevorzugt Bisphenol-A-bis(diphenylphosphat) ist.

3. Polymerzusammensetzung nach Anspruch 1 oder 2, wobei der MFI des ersten heterophasischen Propylencopolymers im Bereich von 5,1 bis 12 g/10 min, bevorzugt von 6,7 bis 9,8 g/10 min liegt, wie nach ISO1133:1-2011 bei 230°C, 2,16 kg gemessen.

4. Polymerzusammensetzung nach einem der vorstehenden Ansprüche, wobei der MFI des zweiten heterophasischen Propylencopolymers im Bereich von 22 bis 42 g/10 min, bevorzugt von 26 bis 36 g/10 min liegt, wie nach ISO1133:1-2011 bei 230°C, 2,16 kg gemessen.

5. Polymerzusammensetzung nach einem der vorstehenden Ansprüche, wobei die Dichte der Polymerzusammensetzung im Bereich von 0,956 bis 1,200 g/cm3, bevorzugt von 0,989 bis 1,158 g/cm3, noch bevorzugt von 1,002 bis 1,098 g/cm3 liegt, wie nach ISO 1183-1:2004 gemessen.

6. Polymerzusammensetzung nach einem der vorstehenden Ansprüche, wobei die feuerfeste Zusammensetzung Piperazinpyrophosphat, Melaminphosphat und Zinkoxid umfasst.

7. Polymerzusammensetzung nach Anspruch 6, wobei die Menge an Piperazinpyrophosphat im Bereich von 40 bis 69 Gew.-%, bevorzugt von 50 bis 67 Gew.-% liegt; die Menge an Melaminphosphat im Bereich von 29 bis 49 Gew.-% liegt und die Menge an Zinkoxid im Bereich von 1 bis 10 Gew.-% liegt, bezogen auf die Gesamtmenge der feuerfesten Zusammensetzung.

8. Polymerzusammensetzung nach einem der vorstehenden Ansprüche, wobei die Menge des ersten heterophasischen Propylencopolymers im Bereich von 15 bis 30 Gew.-%, bevorzugter von 20 bis 28 Gew.-%, noch bevorzugter von 22 bis 26 Gew.-% liegt, bezogen auf die Gesamtmenge der Polymerzusammensetzung.

9. Polymerzusammensetzung nach einem der vorstehenden Ansprüche, wobei die Menge des zweiten heterophasischen Propylencopolymers im Bereich von 40 bis 55 Gew.-%, bevorzugter von 42 bis 50 Gew.-% liegt, bezogen auf die Gesamtmenge der Polymerzusammensetzung.

10. Polymerzusammensetzung nach einem der vorstehenden Ansprüche, wobei die Menge der feuerfesten Zusammensetzung im Bereich von 18 bis 27 Gew.-%, bevorzugt von 19 bis 24 Gew.-% liegt, bezogen auf die Gesamtmenge der Polymerzusammensetzung.

11. Polymerzusammensetzung nach einem der vorstehenden Ansprüche, wobei die Menge des aromatischen Phosphatesters im Bereich von 1,8 bis 8,0 Gew.-%, bevorzugter von 2,5 bis 4,5 Gew.-% liegt, bezogen auf die Gesamtmenge der Polymerzusammensetzung.

12. Polymerzusammensetzung nach einem der vorstehenden Ansprüche, wobei die Polymerzusammensetzung bei 0,8 mm eine UL94-Einstufung von V0 aufweist, wobei die Proben in einer Umgebung von 23 °C, 50 % RH für 48 Stunden nach dem Formen und vor der UL94-Messung aufbereitet wurden.

13. Polymerzusammensetzung nach einem der vorstehenden Ansprüche, wobei die Polymerzusammensetzung eine Zugbruchdehnung von mindestens 42 % aufweist, wie nach ISO527-1:2019 unter Verwendung einer 1A-Probe gemessen.

14. Verfahren zur Herstellung der Polymerzusammensetzung nach einem der Ansprüche 1 bis 13, das die aufeinanderfolgenden Schritte umfasst:
- Bereitstellen des ersten heterophasischen Propylencopolymers, des zweiten heterophasischen Propylencopolymers, der feuerfesten Zusammensetzung und des aromatischen Phosphatesters;
- Mischen des ersten heterophasischen Propylencopolymers, des zweiten heterophasischen Propylencopolymers, der feuerfesten Zusammensetzung und des aromatischen Phosphatesters in einem Extruder.

15. Verwendung der Polymerzusammensetzung nach einem der Ansprüche 1 bis 13 zur Verbesserung der Flammschutzleistung und Flexibilität eines Artikels.

## Revendications

1. Composition polymère comprenant
(A) un premier copolymère de propylène hétérophasique, dans laquelle le MFI du premier copolymère de propylène hétérophasique est compris dans la plage de 3,6 à 14 g/10 min tel que mesuré selon la norme ISO1133:1-2011 à 230 °C, 2,16 kg, dans laquelle le premier copolymère de propylène hétérophasique comprend une première matrice à base de propylène et un premier copolymère éthylène-propylène, dans laquelle la quantité du premier copolymère éthylène-propylène est comprise dans la plage de 18 à 26 % en poids sur la base de la quantité totale du premier copolymère de propylène hétérophasique ;
(B) un second copolymère de propylène hétérophasique, dans laquelle le MFI du second copolymère de propylène hétérophasique est compris dans la plage de 18 à 51 g/10 min tel que mesuré selon la norme ISO1133:1-2011 à 230°C, 2,16 kg, dans laquelle le second copolymère de propylène hétérophasique comprend une seconde matrice à base de propylène et un second copolymère éthylène-propylène, dans laquelle la quantité du second copolymère éthylène-propylène est comprise dans la plage de 15 à 23 % en poids sur la base de la quantité totale du second copolymère de propylène hétérophasique ;
(C) une composition ignifuge comprenant au moins un phosphate ;
(D) un ester de phosphate aromatique,
dans laquelle la quantité du premier copolymère de propylène hétérophasique est comprise dans la plage de 10 à 38 % en poids, la quantité du second copolymère de propylène hétérophasique est comprise dans la plage de 35 à 60 % en poids, la quantité de la composition ignifuge est comprise dans la plage de 13 à 33 % en poids, la quantité de l'ester de phosphate aromatique est comprise dans la plage de 0,3 à 13 % en poids sur la base de la quantité totale de la composition polymère.

2. Composition polymère selon la revendication 1, dans laquelle l'ester de phosphate aromatique est choisi dans le groupe consistant en le résorcinol bis(diphénylphosphate) ;
le bis(diphénylphosphate) de tétraphénylrésorcinol ;
le bisphénol A bis(diphénylphosphate) ;
le diphosphate de bisphénol A;
le résorcinol bis(di-2,6-xylyl phosphate),
l'acide phosphorique, esters mixtes avec [1,1'-biphényl]-4,4'-diol et phénol ; le trichlorure phosphorique, polymère avec 1,3-benzènediol,phénylester ;
le 1,3-phénylène-tétrakis(2,6-diméthylphényl)diphosphate ;
le phosphate d'isopropénylphényle diphényle ;
le 4-phénylphénolformaldéhyde phénylphosphonate ;
le phosphate de tris(2,6-xylyle) ;
le résorcinol bis(di-2,6-xylyl phosphate) ;
le bisphénol S bis(diphénylphosphate) ;
les phénylphosphates de résorcinol-bisphénol A, préférentiellement l'ester de phosphate aromatique est le bisphénol A bis(diphényl phosphate).

3. Composition polymère selon la revendication 1 ou 2, dans laquelle le MFI du premier copolymère de propylène hétérophasique est compris dans la plage de 5,1 à 12 g/10 min, préférentiellement de 6,7 à 9,8 g/10 min tel que mesuré selon la norme ISO1133:1-2011 à 230 °C, 2,16 kg.

4. Composition polymère selon l'une quelconque des revendications précédentes, dans laquelle le MFI du second copolymère de propylène hétérophasique est compris dans la plage de 22 à 42 g/10 min, préférentiellement de 26 à 36 g/10 min tel que mesuré selon la norme IS01133:1-2011 à 230 °C, 2,16 kg.

5. Composition polymère selon l'une quelconque des revendications précédentes, dans laquelle la densité de la composition polymère est comprise dans la plage de 0,956 à 1,200 g/cm3, préférentiellement de 0,989 à 1,158 g/cm3, plus préférentiellement de 1,002 à 1,098 g/cm3 telle que mesurée selon la norme ISO 1183-1:2004.

6. Composition polymère selon l'une quelconque des revendications précédentes, dans laquelle la composition ignifuge comprend du pyrophosphate de pipérazine, du phosphate de mélamine et de l'oxyde de zinc.

7. Composition polymère selon la revendication 6, dans laquelle la quantité de pyrophosphate de pipérazine est comprise dans la plage de 40 à 69 % en poids, préférentiellement de 50 à 67 % en poids ; la quantité de phosphate de mélamine est comprise dans la plage de 29 à 49 % en poids et la quantité d'oxyde de zinc est comprise dans la plage de 1 à 10 % en poids sur la base de la quantité totale de la composition ignifuge.

8. Composition polymère selon l'une quelconque des revendications précédentes, dans laquelle la quantité du premier copolymère de propylène hétérophasique est comprise dans la plage de 15 à 30 % en poids, plus préférentiellement de 20 à 28 % en poids, encore plus préférentiellement de 22 à 26 % en poids sur la base de la quantité totale de la composition polymère.

9. Composition polymère selon l'une quelconque des revendications précédentes, dans laquelle la quantité du second copolymère de propylène hétérophasique est comprise dans la plage de 40 à 55 % en poids, plus préférentiellement de 42 à 50 % en poids sur la base de la quantité totale de la composition polymère.

10. Composition polymère selon l'une quelconque des revendications précédentes, dans laquelle la quantité de la composition ignifuge est comprise dans la plage de 18 à 27 % en poids, préférentiellement de 19 à 24 % en poids sur la base de la quantité totale de la composition polymère.

11. Composition polymère selon l'une quelconque des revendications précédentes, dans laquelle la quantité de l'ester de phosphate aromatique est comprise dans la plage de 1,8 à 8,0 % en poids, plus préférentiellement de 2,5 à 4,5 % en poids sur la base de la quantité totale de la composition polymère.

12. Composition polymère selon l'une quelconque des revendications précédentes, dans laquelle la composition polymère présente une classification UL94 de V0 à 0,8 mm, dans laquelle les éprouvettes sont conditionnées dans un environnement à 23 °C, 50 % HR pendant 48 heures après la formation et avant la mesure UL94.

13. Composition polymère selon l'une quelconque des revendications précédentes, dans laquelle la composition polymère présente un allongement à la rupture d'au moins 42 % tel que mesuré selon la norme ISO527-1:2019 à l'aide de l'éprouvette de type 1A.

14. Processus de préparation de la composition polymère selon l'une quelconque des revendications 1 à 13 comprenant les étapes séquentielles consistant à :
- Fournir le premier copolymère de propylène hétérophasique, le second copolymère de propylène hétérophasique, la composition ignifuge et l'ester de phosphate aromatique ;
- Mélanger le premier copolymère de propylène hétérophasique, le second copolymère de propylène hétérophasique, la composition ignifuge et l'ester de phosphate aromatique dans une extrudeuse.

15. Utilisation de la composition polymère selon l'une quelconque des revendications 1 à 13 pour améliorer les performances ignifuges et la flexibilité d'un article.
